# EUROPEAN PATENT SPECIFICATION

(11) **EP 0 393 282 B1**
(45) Date of publication and mention of the grant of the patent: **12.04.1995**
(21) Application number: 89312673.0
(22) Date of filing: 05.12.1989
(51) Int. Cl.: H04L 25/26, H04B 10/00

(54) **Signal conditioning circuits**
Signalbearbeitungsschaltungen
Circuits de conditionnement de signaux

(30) Priority: 20.04.1989 US 340984
(43) Date of publication of application: 24.10.1990
(73) Proprietor: INTERNATIONAL CONTROL AUTOMATION FINANCE S.A., Ville de Luxembourg (LU)
(72) Inventor: Molnar, Richard J., Willoughby Ohio 44094 (US)
(74) Representative: Cotter, Ivan John

(56) References cited:
- EP-A- 0 130 139
- EP-A- 0 139 210
- US-A- 4 063 045
- TOUTE L'ELECTRONIQUE, no. 478, November 1982, pages 48-56, Paris, FR;"Applications spéciales"

## Description

This invention relates in general to signal conditioning or processing, for example for use in industrial control applications, and in particular to circuits for receiving and conditioning a variety of signals.

Industrial digital and frequency input circuits normally are resistive circuits with opto-coupling for the required isolation. They are able to take a standard control signal such as 24 Vdc, 125 Vdc, 117 Vac, or 230 Vac.

A drawback to these circuits is that they require jumper settings to select a desired signal range. Otherwise, the circuits are limited to only one signal type. A common problem is that customers end up with the jumpers in the wrong positions for their application, whereby failure occurs.

Another problem with a resistive input circuit is that, as the applied voltage is increased. the power consumption increases at an accelerated rate. Also, there is a limit to signal knowledge depending on the method of monitoring. For example, if the level is checked ten times per second, it may be adequate for a digital input; however, a 5 Hz frequency is the highest it would be able to pick up according to Shannon's sampling theorem. On the other hand, if it is monitored at smaller increments like 20,000 times per second, then there probably would not be much time to do anything else. At this point a frequency-to-voltage converter may seem appealing; however, this requires an analogue signal measurement which is indirect and more difficult to implement.

European Patent Application Publication No. EP-A-0 130 139 discloses a circuit for conditioning a signal that may have a variety of waveforms and voltage levels, the circuit comprising a pair of input terminals for receiving the signal, and non-linear voltage limiting means connected across the input terminals for limiting any high transient voltage across the terminals.

According to one aspect of the invention there is provided a circuit for conditioning a signal that may have a variety of waveforms and voltage levels, the circuit comprising a pair of input terminals for receiving the signal, and non-linear voltage limiting means connected across the input terminals for limiting any high transient voltage across the terminals, the circuit being characterised by:
a diode connected to one of the terminals for preventing a flow of reverse current to said one terminal;
a transistor having a base connected through a resistor to the other one of the terminals; and
opto-coupler means connected to an emitter of the transistor for receiving current therefrom, the opto-coupler means having an isolated output for outputting a conditioned signal.

The signal received by the circuit is preferably a control signal and the outputted conditioned signal is preferably for use in an industrial control application.

According to another aspect of the invention there is provided an input circuit for industrial control applications, the circuit including a metal oxide varistor connected between input terminals of the circuit, a diode connected to one of the input terminals for preventing a negative current flow, and a zener diode connected across the input terminals for limiting voltage supplied to a transistor which has a base connected to one of the input terminals and which is connected to an opto-coupler. The opto-coupler preferably has an output connected to a Schmitt trigger input of an inverter, and an output of the inverter is preferably connected to a microprocessor or other apparatus for receiving an industrial control signal.

A circuit according to a preferred embodiment of the invention, described in detail below, is capable of receiving a wide range of dc and ac voltages, thus eliminating the need for jumpers.

The invention will not be further described, by way of illustrative and non-limiting example, with reference to the accompanying drawings, in which:
Figure 1 is a schematic diagram of an input circuit according to a preferred embodiment of the invention;
Figure 2 is a waveform diagram showing at the top the waveform of a possible input control signal and showing at the bottom the waveform of the signal after it has been conditioned by the input circuit for use by a microprocessor or other industrial control apparatus;
Figure 3 is a view similar to Figure 2, showing another input control signal;
Figure 4 is a view similar to Figure 2, showing a still further input control signal; and
Figure 5 is a view similar to Figure 2, showing a possible non-standard input control signal.

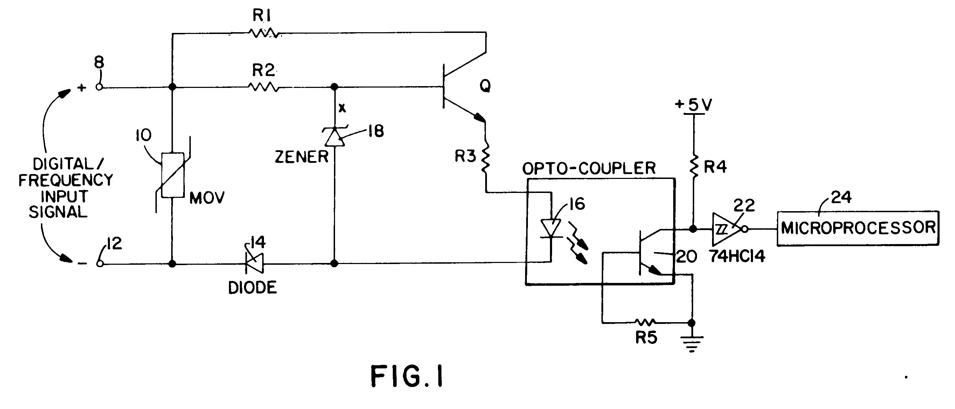

The drawings show an input circuit (control circuit) embodying the invention for receiving and conditioning input control signals having a wide variety of waveform and voltage, and for supplying the signals to a microprocessor or other industrial control apparatus. The input circuit is an improved digital/frequency input circuit which is designed for industrial control applications. A diagram of the circuit is shown in Figure 1.

The circuit allows a wide range of standard and non-standard control signals to be applied. When tested, it had a minimum high level threshold voltage of 11 V and a low level maximum of 8 V for a 0 to 10 kHz signal. The circuit is capable of withstanding an input voltage of 130 Vdc and 250 Vac. Therefore, it can handle any dc control signals from about 15 V to 250 V. Some of the standard control input signals this will accommodate are 15 Vdc, 24 Vdc, 28 Vdc, 125 Vdc, 24 Vac, 117 Vac, and 230 Vac. All of these signals can be applied without the need to use jumpers to select the range. The only criteria for the input signal are that it is above 15 V for high level and below 2 V for low level while at the same time not exceeding +130 Vdc, 250 Vac or going negative by more than -350 Vdc. The signal frequency limit was tested up to about 45 kHz; however, 10 kHz is good enough for most control signal applications. Therefore, practically any waveform shape that holds to these criteria may be used successfully.

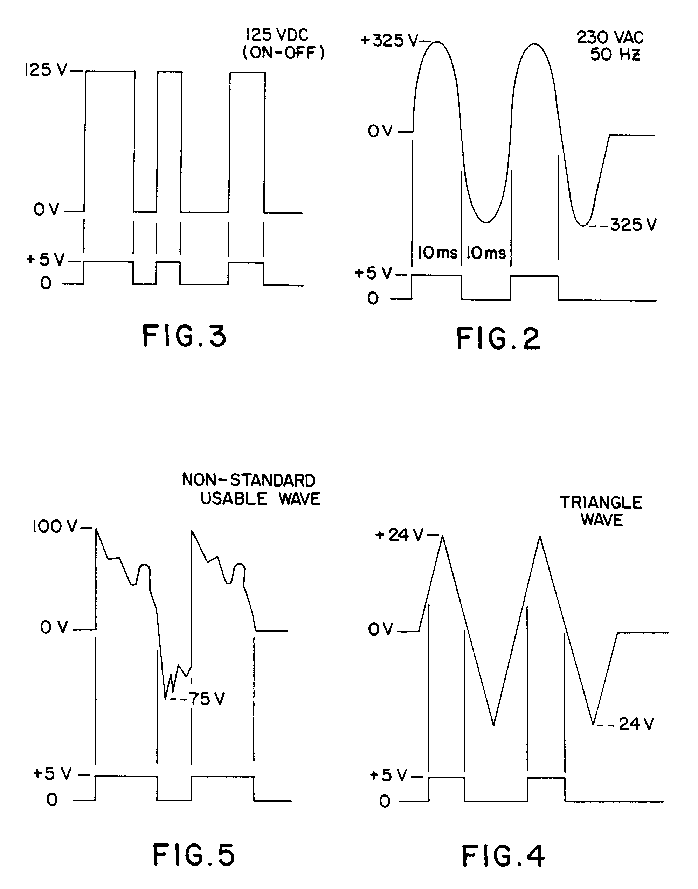

Some examples of possible waveforms are shown in Figures 2 to 5. Some waveform types that can be used are square, triangular, and sinusoidal.

Looking in more detail at Figure 1, the circuit includes positive (+) and negative (-) input terminals 8 and 12 and a metal oxide varistor (MOV) 10 connected across the input terminals 8 and 12 to suppress any transients of over 370 V that appear. A diode 14 allows positively biased signals to pass and cuts off negatively biased signals. In the reverse bias mode, hardly any current flows, which saves power and the rest of the components. As the signal is applied positively to activate the high level, a transistor Q turns on, which allows current to flow through a diode 16 of an opto-coupler. The transistor Q and a zener diode 18 connected as shown have bias currents supplied from the signal through a resistor R2 connected between the input terminal 8 and a base of the transistor Q. Once the zener voltage of the zener diode 18 is reached, it controls a steady current to flow through the transistor Q. This is due to the nearly constant voltage appearing across an output resistor R3 connected between an emitter of the transistor Q and the diode 16. Therefore, after the signal reaches this point it will only draw 3 to 4 mA, regardless of how much higher the signal goes.

This current through the opto-coupler diode 16 will cause a transistor 20 of the opto-coupler (which is optically coupled to the diode 16) to conduct, thereby pulling low the input to an inverter with Schmitt trigger circuit 22 (type 74HC14 circuit) connected to a collector of the transistor 20. The 74HC14 type circuit 22 has a Schmitt trigger input which provides the hysteresis necessary to keep noise from causing false pulses. The inverted output of the 74HC14 type circuit 22 is taken to an input pin of a microprocessor 24 which uses the signal for some industrial control function.

As the applied control signal drops, it will reach a point where the current through the resistor R3 and the opto-coupler 16, 20 is such that it allows a pull-up resistor R4 (connected as shown between a +5 Vdc supply and the circuit 22) to raise the input voltage to the circuit 22, which causes the inverted output thereof to go low. The microprocessor 24 can sense these changes in level (edge-triggered interrupts). These interrupts can mark time be keeping track of the counts between them. Since there is a known internal clock frequency, the interrupt frequency can be determined. In a dc digital control input situation, one can determine if the level is high or low from reading the port or by keeping track of the transition state.

ac line digital control input signals can be realised by using the frequency mode. An ac line signal can be recognized as a 45 to 65 Hz frequency for a high level signal and less than this for a low level signal. For 50/50 duty cycle waveforms, the frequency can be determined in half of a cycle. Another approach for determining the frequency is to count the transitions in a fixed period of time; however, this will not give quick results.

As shown in Figure 1, a resistor R1 is connected between the positive input terminal 8 and a collector of the transistor Q for protecting the collector against surged current. A resistor R5 is connected between a base and an emitter of the opto-coupler transistor 20 for reducing noise, and for evening out opto-coupler on-off switching times.

The opto-coupler 16, 20 can, for example, be a 4N36 type circuit, which is generally available in the industry.

The microprocessor 24 requires a 0-5 V digital signal to sense the input control signal and provide adequate control to devices connected to the microprocessor.

The MOV 10 prevents transients and noise spikes, while the zener diode 18 sets the voltage for the transistor Q, which requires a control voltage to operate and itself set up a constant current to the opto-coupler 16, 20.

The digital/frequency input circuit described above has many advantages over prior arrangements.

The elimination of physical jumpers in the circuit eliminates the need for a customer to set the jumpers. Not only does this free the customer from the need to consult documentation on jumper positions, but it helps prevent failure due to incorrect jumper settings.

Since the above-described circuit is practically waveform independent, this gives the customer the flexibility of running sinusoidal signals, square wave (on-off dc signals), or non-standard signals such as a triangular signal, if so desired.

Since the circuit doubles as a digital and/or frequency input circuit, additional circuitry such as frequency-to-voltage converters or ac coupled configurations are not required.

The circuit limits the current input to 3 to 4 mA, which greatly reduces power consumption when high voltages are applied. For instance, if the voltage applied increased from 24 Vdc to 125 Vdc, the power in a standard resistive input circuit would go up by over 27 times for the value at which it started; whereas in the above-described circuit it would go up only by a factor of about 5.

The above-described circuit typically pulls (draws) 3 to 4 mA. It requires a minimum current to activate the high level state; thus, this will provide some inherent noise immunity. The 74HC14 type circuit 22 with its Schmitt trigger input builds in hysteresis which helps prevent output oscillation during level transitions. The resistor R5 helps reduce noise from activating the opto-coupler.

This circuit can be applied to a variety of input ranges and sensitivity levels by changing the values of the resistors R1, R2, R3 and the zener voltage of the zener diode 18. This would redefine the threshold voltages and input current limiting values.

## Claims

1. A circuit for conditioning a signal that may have a variety of waveforms and voltage levels, the circuit comprising a pair of input terminals (8, 12) for receiving the signal, and non-linear voltage limiting means (10) connected across the input terminals (8, 12) for limiting any high transient voltage across the terminals, the circuit being characterised by:
a diode (14) connected to one (12) of the terminals (8,12) for preventing a flow of reverse current to said one terminal (12);
a transistor (Q) having a base connected through a resistor (R2) to the other one (8) of the terminals (8,12); and
opto-coupler means (16, 20) connected to an emitter of the transistor (Q) for receiving current therefrom, the opto-coupler means having an isolated output for outputting a conditioned signal.

2. A circuit according to claim 1, wherein the non-linear voltage limiting means (10) comprises a varistor.

3. A circuit according to claim 2, including a zener diode (18) and a resistor (R2) having one end connected to one end of the varistor (10) and an opposite end connected to a zener diode (18), the first-mentioned diode (14) being connected between the varistor (10) and the zener diode (18).

4. A circuit according to claim 3, wherein said resistor (R2) having respective ends connected to the varistor (10) and the zener diode (18) is said resistor (R2) through which the base of the transistor (Q) is connected to the other one (8) of the terminals (8, 12).

5. A circuit according to any one of the preceding claims, including an inverter (22) having a Schmitt trigger input connected to the output of the opto-coupler means (16, 20), the inverter (22) having an inverting output for supplying the conditioned signal.

6. A circuit according to claim 5, including a microprocessor (24) connected to the inverting output of the inverter (22).

7. A circuit according to any one of the preceding claims, including another resistor (R1) connected to the input terminal (8) which is connected to the first-mentioned resistor (R2), said other resistor (R1) being connected to a collector of the transistor (Q).

8. A circuit according to claim 7, including a further resistor (R3) connected between the transistor (Q) and the opto-coupler means (16, 20).

9. A circuit according to claim 8, wherein the opto-coupler means (16, 20) comprises an opto-diode (16) connected between said further resistor (R3) and the first-mentioned diode (14), and an opto-transistor (20) optically coupled to the opto-diode (16).

10. A circuit according to claim 9, wherein the opto-transistor (20) has a base, an emitter and a collector, and a resistor (R5) is connected between the base and one of the collector and the emitter of the opto-transistor (20).

11. A circuit according to claim 10, when appendent to claim 5, wherein the inverter (22) having a Schmitt trigger input is connected to the collector of the opto-transistor (20), and a resistor (R4) is connected between the input of the inverter (22) and a voltage supply of selected level.

## Patentansprüche

1. Schaltkreis zum Aufbereiten eines Signales, welches eine Vielfalt von Wellenformen und Spannungsniveaus haben kann, wobei der Schaltkreis ein Paar von Eingangsanschlüssen (8, 12) für den Empfang des Signales und eine nichtlineare Spannungsbegrenzungseinrichtung (10) aufweist, die an die Eingangsanschlüsse (8, 12) und diese verbindend angeschlossen ist, um jegliche hohe Stoßspannung an den Anschlüssen zu begrenzen, wobei der Schaltkreis gekennzeichnet ist durch:
eine Diode (14), die an einem (12) der Anschlüsse (8, 12) angeschlossen ist, um einen Umkehrstrom zu dem Anschluß (12) hin zu verhindern,
einen Transistor (Q), dessen Basis über einen Widerstand (R2) mit dem anderen (8) der Anschlüsse (8, 12) verbunden ist,
eine Optokopplereinrichtung (16, 20), die mit dem Ermitter des Transistors (Q) verbunden ist, um an diesem Strom aufzunehmen, wobei die Optokopplereinrichtung einen isolierten Ausgang für die Ausgabe eines aufbereiteten Signales hat.

2. Schaltkreis nach Anspruch 1, wobei die nichtlineare Spannungsbegrenzungseinrichtung (10) einen Varistor aufweist.

3. Schaltkreis nach Anspruch 2, **dadurch gekennzeichnet, daß** sie eine Zenerdiode (18) und einen Widerstand (R2) aufweist, der mit einem Ende an einem Ende des Varistors (10) und mit seinem gegenüberliegenden Ende an einer Zenerdiode (18) angeschlossen ist, wobei die ersterwähnte Diode (14) zwischen den Varistor (10) und die Zenerdiode (18) geschaltet ist.

4. Schaltkreis nach Anspruch 3, wobei der Widerstand (R2), welcher mit seinen Enden jeweils an den Varistor (10) und die Zenerdiode (18) angeschlossen ist, derjenige Widerstand (R2) ist, über welchen die Basis des Transistors (Q) mit dem anderen (8) der Anschlüsse (8, 12) verbunden ist.

5. Schaltkreis nach einem der vorstehenden Ansprüchen, **dadurch gekennzeichnet, daß** er einen Inverter (22) aufweist, der einen Schmitt-Trigger-Eingang hat, welcher mit dem Ausgang der Optokopplereinrichtung (16, 20) verbunden ist, wobei der Inverter einen invertierenden Ausgang für die Bereitstellung des geglätteten Signales hat.

6. Schaltkreis nach Anspruch 5, **dadurch gekennzeichnet, daß** er einen Mikroprozessor (24) aufweist, welcher mit dem invertierenden Ausgang des Inverters (22) verbunden ist.

7. Schaltkreis nach einem der vorstehenden Ansprüche, **dadurch gekennzeichnet, daß** er einen weiteren Widerstand (R1) aufweist, welcher mit dem Eingangsanschluß (8) verbunden ist, der mit dem zuerst erwähnten Widerstand (R2) verbunden ist, wobei der weitere Widerstand (R1) mit dem Kollektor des Transistors (Q) verbunden ist.

8. Schaltkreis nach Anspruch 7, **dadurch gekennzeichnet, daß** er noch einen zusätzlichen Widerstand (R3) aufweist, der zwischen den Transistor (Q) und die Optokopplereinrichtung (16, 20) geschaltet ist.

9. Schaltkreis nach Anspruch 8, wobei die Optokopplereinrichtung (16, 20) eine Optodiode (16) aufweist, die zwischen den zusätzlichen Widerstand (R3) und die zuerst erwähnte Diode (14) geschaltet ist, sowie einen Optotransistor (20) aufweist, der optisch mit der Optodiode (16) gekoppelt ist.

10. Schaltkreis nach Anspruch 9, wobei der Optotransistor (20) eine Basis, einen Emeter und einen Kollektor hat und wobei ein Widerstand (R5) zwischen die Basis und den Kollektor oder den Emeter des Optotransistors (20) geschaltet ist.

11. Schaltkreis nach Anspruch 10, soweit er auf Anspruch 5 rückbezogen ist, wobei der Inverter (22), der einen Schmitt-Trigger-Eingang hat, mit dem Kollektor des Optotransistors (20) verbunden ist, wobei ein Widerstand (R4) zwischen den Eingang des Inverters (22) und eine Spannungszufuhr auf einem ausgewählten Niveau geschaltet ist.

## Revendications

1. Circuit pour conditionner un signal qui peut avoir toute une variété de formes d'onde et de niveaux de tension, le circuit comprenant une paire de bornes d'entrée (8, 12) pour recevoir le signal, un moyen de limitation de tension non linéaire (10) connecté entre les bornes d'entrée (8, 12) pour limiter toute tension transitoire élevée entre les bornes, le circuit étant caractérisé par :
une diode (14) connectée à l'une (12) des bornes (8, 12) pour empêcher un écoulement de courant inverse vers ladite une borne (12) ;
un transistor (Q) dont la base est connectée à l'autre (8) des bornes (8, 12), par l'intermédiaire d'une résistance (R2) ; et
un moyen de photocouplage (16, 20) connecté à l'émetteur du transistor (Q) pour en recevoir du courant, le moyen de photocouplage ayant une sortie isolée pour sortir un signal conditionné.

2. Circuit selon la revendication 1, dans lequel le moyen de limitation de tension non linéaire (10) comprend une varistance.

3. Circuit selon la revendication 2, incluant une diode de Zener (18) et une résistance (R2) ayant une extrémité connectée à une extrémité de la varistance (10) et l'extrémité opposée connectée à la diode de Zener (18), la première diode mentionnée (14) étant connectée entre la varistance (10) et la diode de Zener (18).

4. Circuit selon la revendication 3, dans lequel ladite résistance (R2) dont les extrémités respectives sont connectées à la varistance (10) et à la diode de Zener (18) est ladite résistance (R2) par l'intermédiaire de laquelle la base du transistor (Q) est connectée à l'autre (8) des bornes (8, 12).

5. Circuit selon l'une quelconque des revendications précédentes, incluant un inverseur (22) comportant une entrée de bascule de Schmitt connectée à la sortie du moyen de photocouplage (16, 20), l'inverseur (22) ayant une sortie inversante pour délivrer le signal conditionné.

6. Circuit selon la revendication 5, incluant un microprocesseur (24) connecté à la sortie inversante de l'inverseur (22).

7. Circuit selon l'une quelconque des revendications précédentes, incluant une autre résistance (R1) connectée à la borne d'entrée (8) qui est connectée à la première résistance mentionnée (R2), ladite autre résistance (R1) étant connectée au collecteur du transistor (Q).

8. Circuit selon la revendication 7, incluant une résistance supplémentaire (R3) connectée entre le transistor (Q) et le moyen de photocouplage (16, 20).

9. Circuit selon la revendication 8, dans lequel le moyen de photocouplage (16, 20) comprend une photodiode (16) connectée entre ladite résistance supplémentaire (R3) et la première diode mentionnée (14), et un phototransistor (20) couplé optiquement à la photodiode (16).

10. Circuit selon la revendication 9, dans lequel le phototransistor (20) comporte une base, un émetteur et un collecteur, et dans lequel une résistance (R5) est connectée entre la base et l'un ou l'autre du collecteur et de l'émetteur du phototransistor (20).

11. Circuit selon la revendication 10 lorsqu'elle dépend de la revendication 5, dans lequel l'inverseur (22) comportant une entrée de bascule de Schmitt est connecté au collecteur du phototransistor (20), et dans lequel une résistance (R4) est connectée entre l'entrée de l'inverseur (22) et une source de tension d'un niveau choisi.
